# EUROPEAN PATENT APPLICATION

(11) **EP 1 017 254 A1**
(43) Date of publication of application: **05.07.2000**
(21) Application number: 99310622.8
(22) Date of filing: 29.12.1999
(51) Int. Cl.: H05B 3/84, E06B 3/66

(54) **Light transmitting sheet material with an electrically heatable surface**

(30) Priority: 25.12.1998 JP 37649598; 25.12.1998 JP 37649798
(71) Applicant: FIGLA CO., LTD., Minatoku, Tokyo 105 (JP)
(72) Inventor: Kato, Shouzaburo c/o Figla Co., Ltd., Minato-ku, Tokyo 105 (JP); Kanada, Yoshimi c/o Figla Co., Ltd., Minato-ku, Tokyo 105 (JP); Danmura, Yoshikazu c/o Figla Co., Ltd., Minato-ku, Tokyo 105 (JP); Ochiai, Katshiko c/o Figla Co., Ltd., Minato-ku, Tokyo 105 (JP); Honda, Yasutoshi c/o Figla Co., Ltd., Minato-ku, Tokyo 105 (JP); Okuno, Gaku c/o Figla Co., Ltd., Minato-ku, Tokyo 105 (JP)
(74) Representative: Harland, Linda Jane

(57) **Abstract**

A light-transmitting sheet material including a heat generation layer formed on one of the surfaces of a transmitting sheet material and terminals disposed at suitable positions on the periphery of the heat generation layer to provide a heat generation function, wherein the heat generation layer comprises a selective transmission (reflection) film having a specific wavelength. A protective layer, an insulating layer, etc., are formed on the heat generation layer, as necessary, and are electrically controlled so that it can be suitably adapted to open portions of a building, the sheet material is constituted as a whole into a laminate body, and is provided as heat generation bodies of various variations.

## Description

### Technical Field

The present invention relates to a board having exothermic function mainly made from plate glass used for an opening in a general building, more particularly, a board having new exothermic function utilizing selective penetrating film as an exothermic member and its system.

### Background art

Conventionally, in an opening of building, for example, air layer is generally arranged intermediate of a board from a surface of functions such as heat insulation and sound insulation. In addition, a plate glass having improved heat insulation with special metal film coated on the inner surface of the glass outdoor and various functions as to light insulating is known.

However, the above-mentioned structure has improved only heat insulating function, and at the cold time various problems such as dew condensation, cold draft and so on have been caused by temperature difference between inside and outside of building.

These days, there has been also a problem, that is a cooler is used even at the cold time due to use of office appliances generating heat, which is accompanied by air loss.

The present invention was achieved to solve the above mentioned
problems and has as a object the provision of a building material for construction which makes indoor space more comfortable in a context of efficiently utilizing thermal energy in the building.

### Disclosure of the Invention

The present invention was accomplished mainly from three viewpoints. The first point is to provide a board having exothermic function as a basic material, which is applied not only to an opening of building but also as partitions. The second is to provide a board having exothermic function as a structure suitable to an opening of building, which is mainly intended for a board surrounded by a frame. The third relates to a control structure realizing saving energy in a building with a board having exothermic function disclosed in the present invention.

### Brief description of drawings

Fig. 1 to Fig. 8 are schematic views of a board having exothermic function according to the present invention.
Fig. 9 to Fig. 21 are schematic views in case where a board having exothermic function is constituted as multi-layer glass.
Fig. 22 and Fig. 23 are schematic views of a system using a board having exothermic function according to the present invention.
Fig. 24 and Fig. 25 are schematic views showing insulating construction around ends of the board.

### Best mode for carrying out the invention

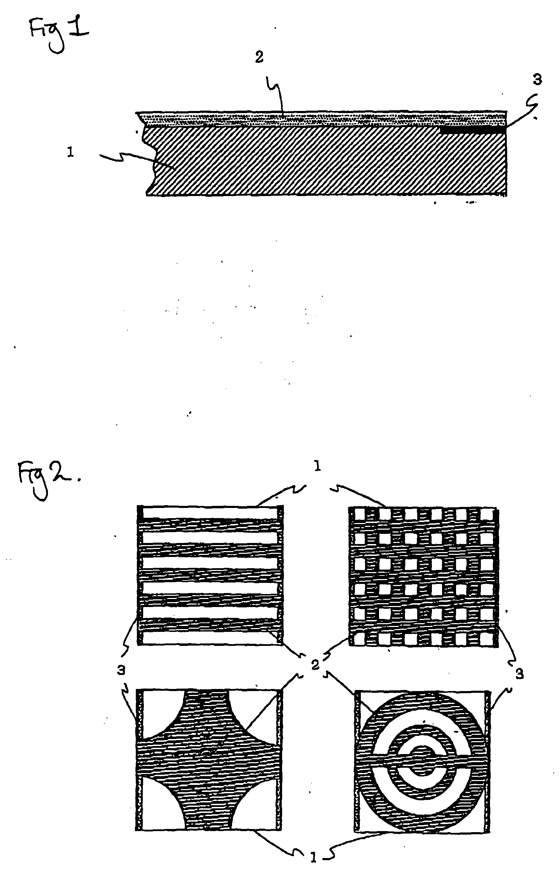

Fig. 1 is an explanatory view of a transparent board having exothermic function. As shown in the drawing, the board 1 in the present invention is glass such as float glass, wire glass and colored glass and so on. An exothermic layer 2 having transparency and conductivity is formed on the board 1.

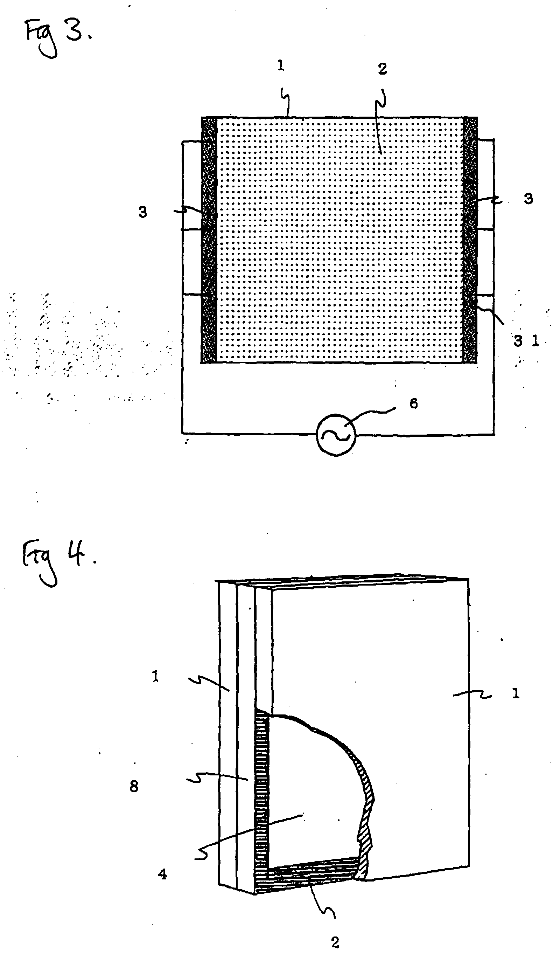

For the exothermic layer 2 a thin film made of more than one kind of metals selected from a group of gold, silver, copper, palladium, and aluminum, titanium, stainless, nickel, cobalt, chromium, iron, magnesium, zirconia, gallium etc, and/or a metal oxide thin film of carbon, oxygen etc. thereof, or a film or a sheet of polyester resin such as polyethylene terephthalate, polyethylene-2.6-naphthalate, polybuthylene terephthalate; polycarbonate resin; polyolephin resin such as polyketone, polyethylene, polypropylene; polychlorinated vinyl; polystyrene polyphenylene oxide; polymethylmethacrymate, polystyrene or the like, polyamide resin; polyimide resin; and cellulosic resin such as cellophane, cellulose triacetate, having a metal oxide thin film thereon; any of these is a raw material having selective penetrating properties (reflection). The exothermic layer 2 with film structure by metal vacuum evaporation is easily produced and constructed. The exothermic layer 2 is freely laid out on the surface of the board 1 as shown in Fig. 2 and can be formed intermittently apart from electrically insulating part if necessary. In addition, the exothermic layer 2 can be in combination of selective penetrating properties (reflection) film and a strip-like heating member formed by metal spraying or a exothermic member capable of aqueous film coating.

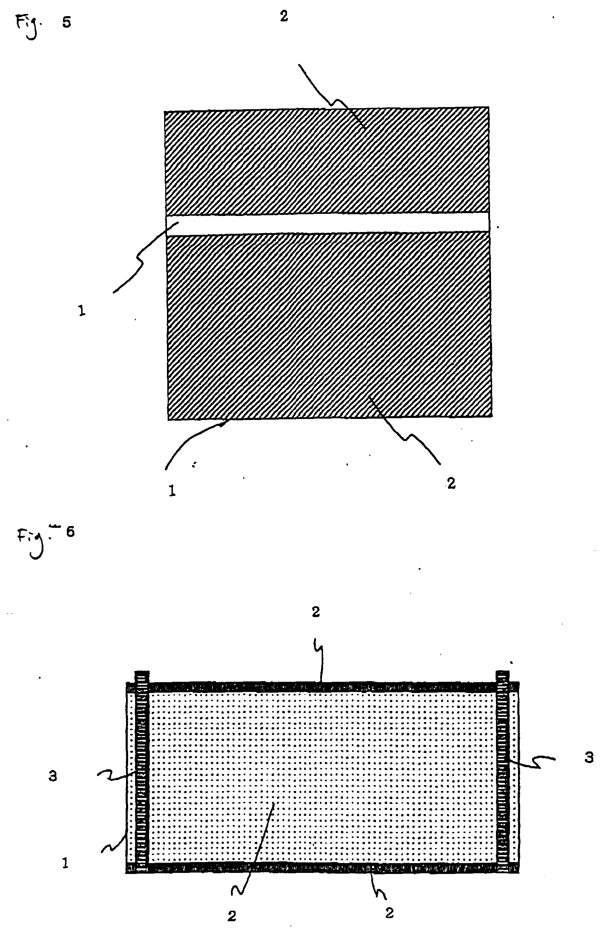

As shown in Fig. 3, the said exothermic layer 2 generates heat by turning on an electric current through an outer power 6, therefore, there is formed an electrode layer 3 having a connecting point 31 connecting with the outer power 6 at the predetermined width by a suitable means such as bonding or coating an electrically conductive material partially or continuously at the edge of the exothermic layer 2. The connecting point 31 is formed at plural points. Power is supplied to the electrode layer 3 from the power 6 at partial pressure in order not to cause voltage drop mainly due to electrical resistance of said exothermic layer 2.

In addition, due to the layer structure of the electrode layer 3, the exothermic layer 2 is overlapped therewith, as shown in Fig. 1, therefore, the board 1 can be arranged with a recess on the surface thereof to level the thickness by etching, sandblasting and so on.

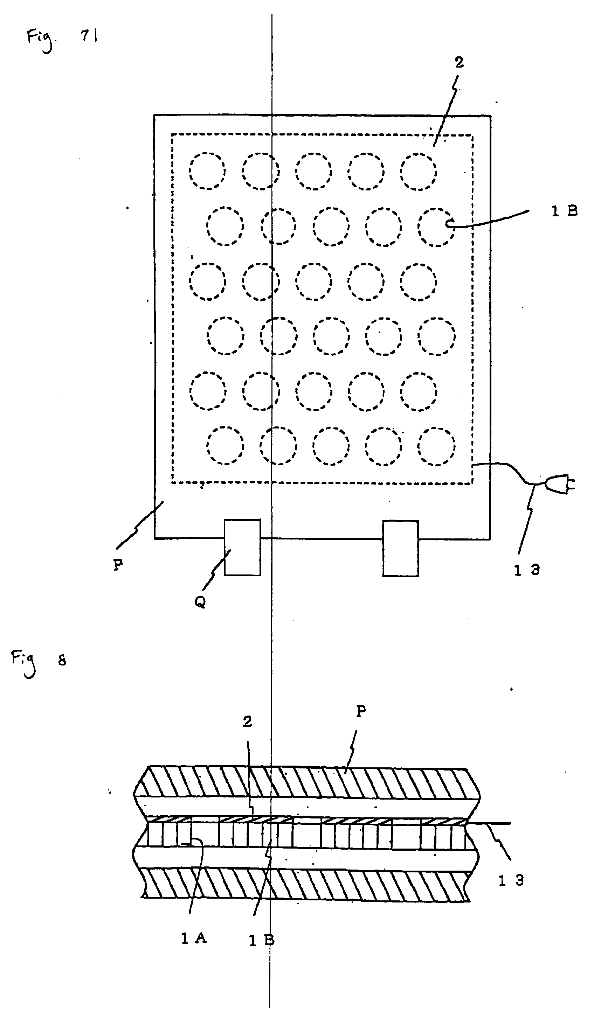

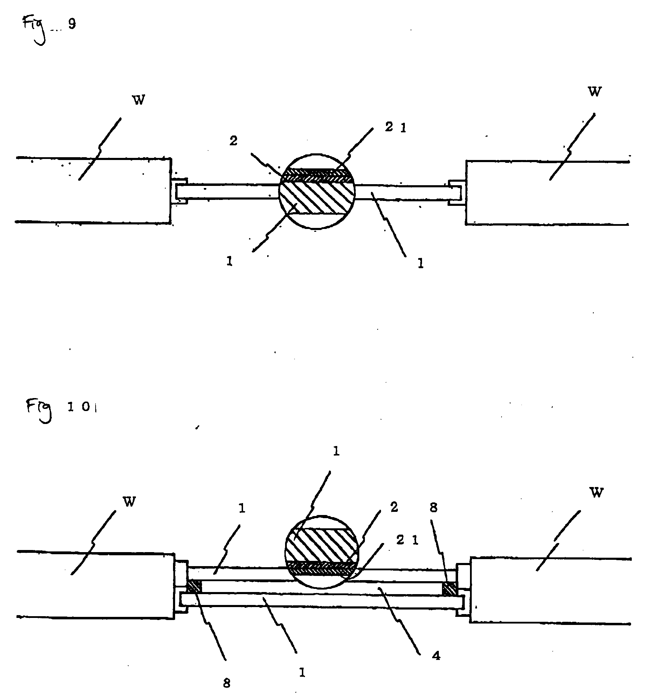

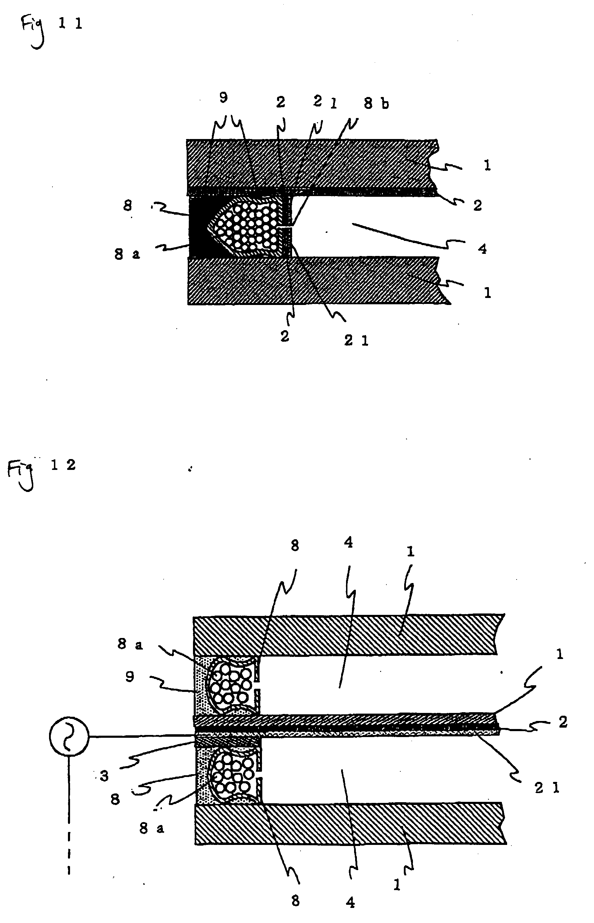

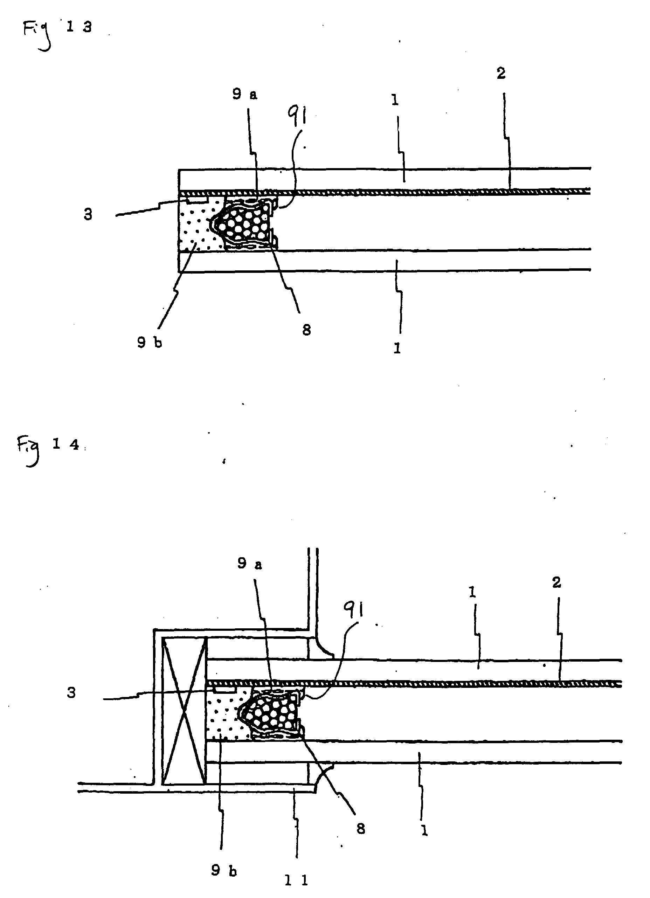

Moreover, as shown in Fig. 4, a board 1 having exothermic function according to the present invention is formed as multi-layered glass to be mounted in an opening in building, but as shown in Fig. 7 it can be formed as partition panel P provided with mounting stand Q. In such a case, a punching metal having holes 1B is formed as a base material A with an exothermic layer 2 on the said base material 1A.

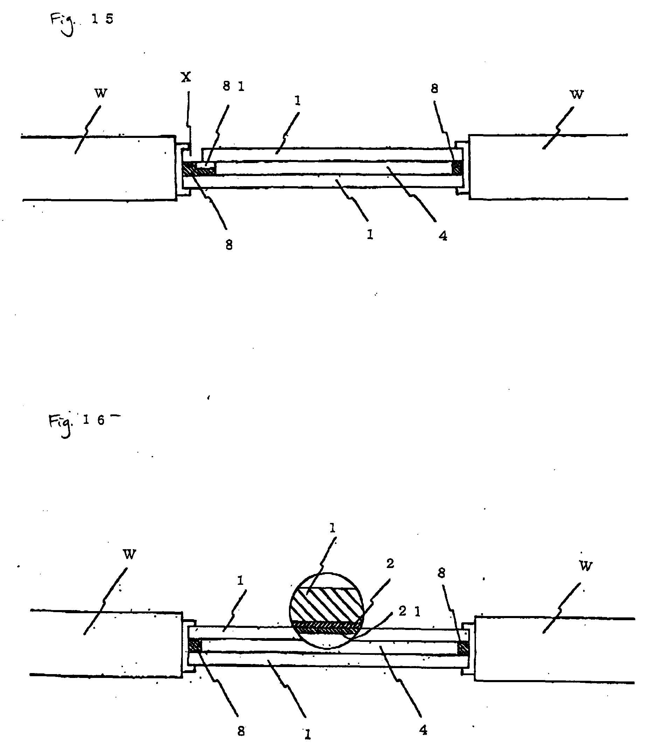

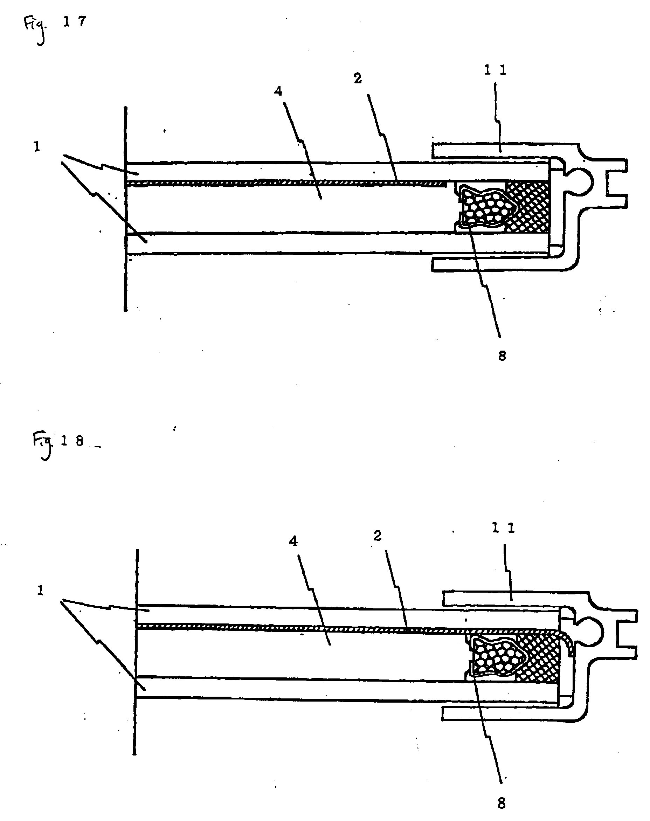

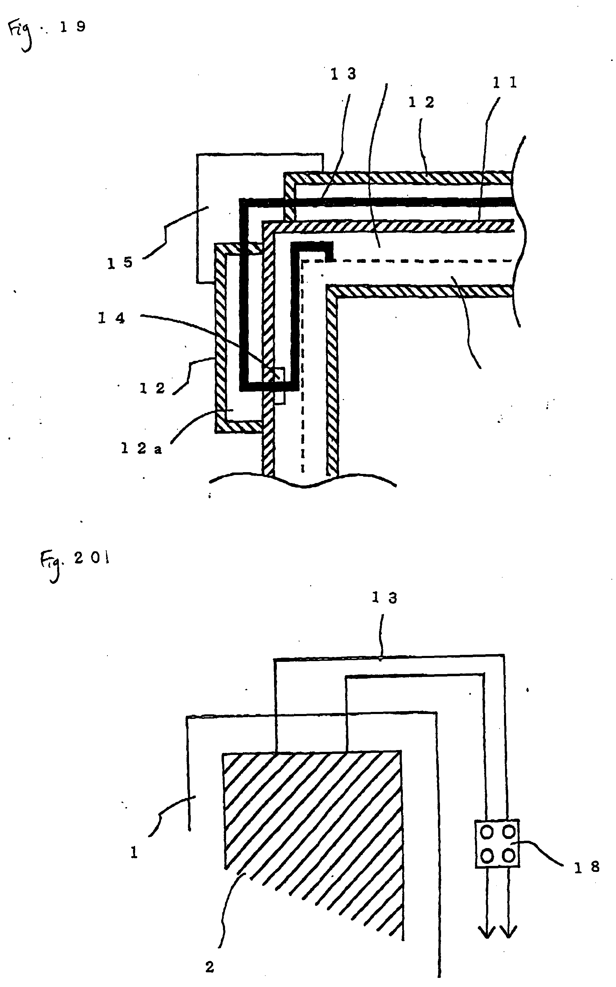

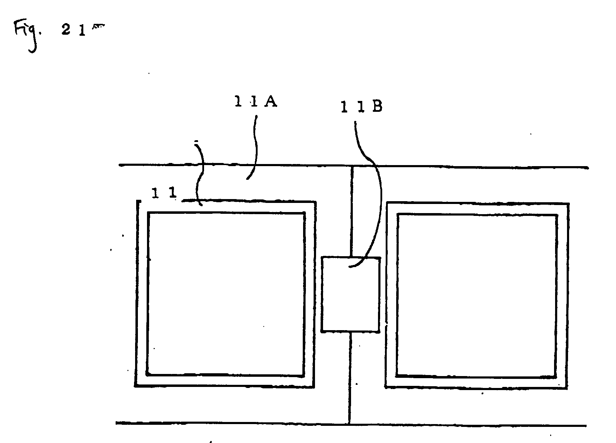

The board 1 according to the present invention is disclosed as a structure specific to multi-layered glass in an opening W of building. In Fig. 9 to Fig. 21 show an embodiment in which a multi-layered glass is formed. In Fig. 9 and Fig. 10, an exothermic layer 2 is formed with an upper layer 21 or a lower layer (not shown) having heat resistance, transparency, and non-conductivity, and using, for example, Teflon, silicon, melanin, amid resin and so on. That is an attempt to prevent short circuit in case where other conductive member is arranged to be in contact as well as to improve bonding with the base material. Also, the exothermic layer 2 can be formed on a spacer 8 having a drying agent 8a encased as shown in Fig. 11.

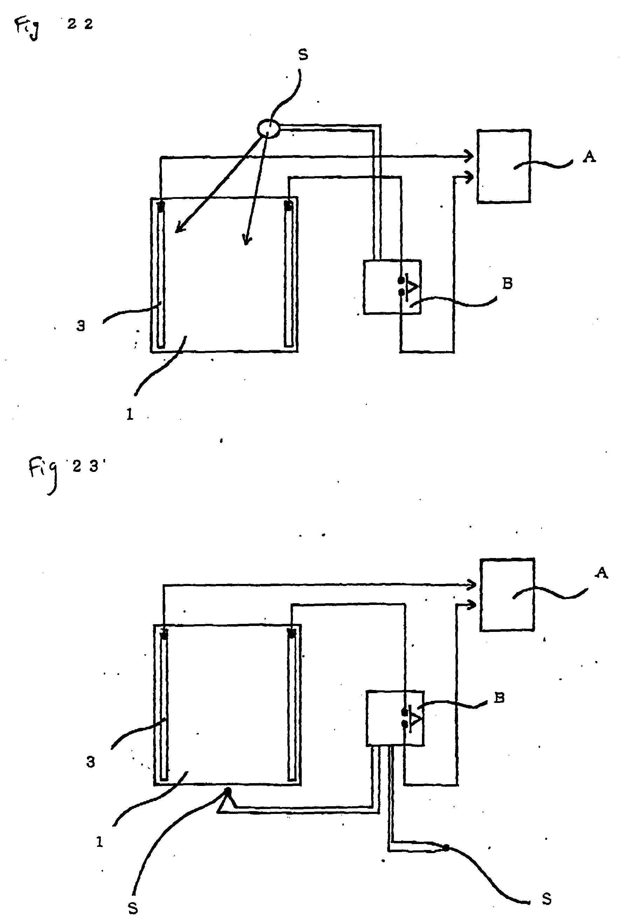

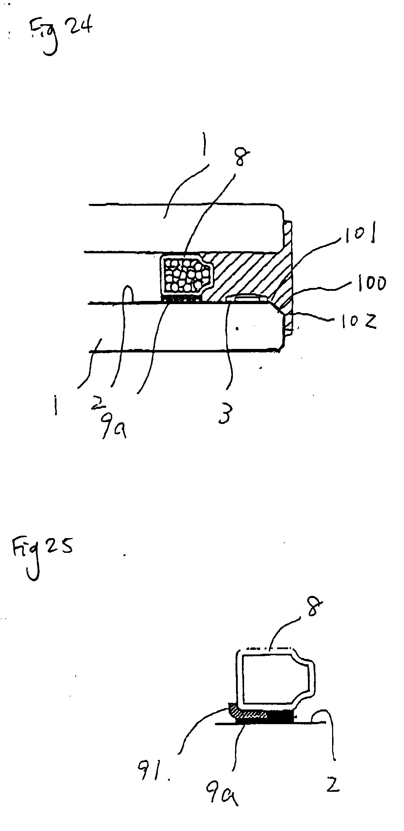

Said exothermic layer 2 and electrode layer 3 are formed on the surface contacting the space 8 and the board 1 as shown in Fig. 12, in electronically insulating manner by the upper layer 21. Fig. 13 and Fig. 14 show the embodiment of such a structure in detail.

In the embodiment, the spacer 8 is arranged at the outer periphery end between two sheets of the boards 1, 1 and the spacer 8, the exothermic layer 3 on the board 1 and the contacting portion have a substantially flat surface portion, and the outer periphery end have a taper-shaped appearance. This shape is suitable to ensure moisture resistance within an air layer 4 formed between the boards 1, 1. There are formed a primary seal material 9a on the flat surface portion of the spacer 8 and a secondary seal material 9b on the outer periphery end being tapered to seal.

Incidentally, since the spacer 8 is made of a material having conductivity such as aluminum, a phenomenon of short circuit will occur between the exothermic layer 2 and the spacer 8 if a general resin bond is used. Therefore, in the embodiment, an insulator is mixed in said primary seal material 9a in advance to reduce compression ratio of the primary seal material 9a whereby the contacting surface of the exothermic layer 2 and the spacer 8 is completely insulated, similarly to Fig. 24, and in this structure an estranging distance between a side of the spacer 8 and adjacent exothermic layer 2 is adequate by maintaining the thickness to proper extent.

Also, Fig. 25 shows another insulating structure, in this embodiment, a substantially L-shaped primary seal material 9a is used, the estranging distance between a side of a spacer 8 and adjacent exothermic layer 2 is maintained the ideal level in appearance by a bent portion 91.

Furthermore, an electrode layer 3 is formed on the end of a board 1 in a secondary seal material 9b on the outer periphery edge using the above-mentioned structure, whereby it is possible to simplify the structure at the time of electrically connecting with an outer power. In Fig. 14, since the electrode layer 3 is arranged in a secondary seal material 10 which is an organic material, an optically shielding structure is formed in this arrangement in order to prevent a phenomenon in which deterioration tends to occur due to penetration of ultraviolet light. Specifically, the electrode layer 3 is arranged in a recess of a sash frame 11 preventing the direct penetration of ultraviolet light into the electrode 3 at the frame part of the sash 11.

Moreover, in Fig. 23 there is a chamfering surface 100 at the end of a board 1. This enables to provide an estranging distance required to insulate from a frame member arranged in contact with the end surface of the board 1 in case where a metal layer that is an exothermic layer 2 is formed on the surface of the board by float, in other words it is formed throughout the surface as well as stretches to a partial portion of the end. The chamfering surface 100 is cut out after the exothermic layer is formed, thus, insulated from a conductive layer on the end surface of the board formed with the exothermic layer 2 as an extra, also an inner edge 101 and an outer edge 102 are formed in the ends of the board 1 and an electrode 1 is formed to extend into the inner edge of the exothermic layer 9. Also, a sealer 5b is formed as in such a manner that it covers a conducive layer 91 on the end surface of a board 2.

In Fig. 15 a release portion X communicating the atmosphere within an air layer 4 and the indoor atmosphere is provided in a part of the board 1 on the indoor side. The release portion X is formed, for example, by forming a notch 81 at a part of the spacer 8. And the release portion X is preferably formed upwardly. With such a structure, the atmosphere within the air layer 4 heated by turning on an electric current the exothermic layer 2 circulates into the indoor atmosphere to warm the room space smoothly.

In Fig. 16 a board 1 being formed with an exothermic layer 2 is mounted to a fixed sash window afterwards. With such a construction, a exothermic board can be easily applied to a window for a house which already exists. Fig. 17 and Fig. 18 show arrangements of two exothermic layers 2 omitting the insulating structure and electrode structure. In Fig. 17 of these, the exothermic layer 2 is placed within space surrounded by a space 8 in which the board 1 is mainly heated. In Fig. 18 the exothermic layer 2 is placed from the spacer 8 to adjacent frame 11 and the frame 11 is also heated.

In Fig. 19 a sash frame 11 with a hollow portion 11a having a substantially U-like shaped cross section is provided in outer periphery portion of respective board 1 in order to be placed in an opening W of building. In this embodiment, a hollow member 12 having a hollow portion 12a in rectangular cross-section is attached to each outer periphery of two frames 11 formed in a body with an arbitrary angled portion.

The hollow member 12 may be preferably made of synthetic resin excellent in electrically insulation, but it is formed from parts of aluminum which are generally used for a frame in order to standardize the appearance of the opening, and inner coating such as insulating sheet or the like is formed on said parts.

The exothermic layer 2 formed on the surface of said board 1 is provided with an electrode layer (not shown) in its periphery end and a wiring 13 electrically connecting with outer power is guided into a hollow portion 12a of a frame 12 from the electrode layer.

In Fig. 19 a wiring 13 is a conductive naked wire, therefore, the wiring 13 goes through one of the hollow portions 12a in the hollow members 12 through a bush 14 made of synthetic resin capable of electrically insulating and water proof, and stretches into the other hollow portion 12a of the hollow member 12.

In multi-layered glass constructed as mentioned above the wiring 13 can be arranged in a manner suited to the appearance of a frame structure in an opening W of building. A conductive wire can be used as wiring in a stable insulating environment without modifying a metal frame structure which has already been constructed.

Fig. 20 is an explanatory view of another embodiment. In this embodiment, a terminal stand 18 is provided at ends of a wiring 13 guided from an exothermic layer 2 and the exothermic member 2 and an outer power are connected through the terminal 18. The terminal 18 is arranged at a frame or adjacently to the frame, whereby a check can be carried out as to on-off control of exothermic system, short circuit and so on.

Specifically, as shown in Fig. 21 said terminal 18 may accommodate with a window portion 11B at the part of various hanging members such as a ceiling board 11A etc. used for bonding of a frame 11 or frames 2 each other. In addition, with a lid portion being detachable or capable of opening or closing the terminal 18 can accommodate in such a manner as not to be normally observed from the outside.

Fig. 22 shows an exothermic system according to the present invention. In Fig. 22 a main power A electrically connected in an exothermal layer 2 and a control portion B having a driving portion to control the main power A, and being provided with an on-off switch are electrically connected. The control portion B is provided with a noncontact temperature sensor such as a sensor for emitted temperature which senses the temperature on the surface of a board 1, another sensor such as contact sensor S. As shown in Fig. 24, in case where multiple sheets of boards 1 are placed, these boards 1 are controlled by said control portion B for usage.

Especially, in the present invention, when a board 1 is heated with a system having the above-mentioned construction, the temperature on the surface of the board 1 is controlled to be substantially same as the surface temperature of adjacent inner wall surface X. This can be achieved mainly in a system of Fig. 23. When there is a difference in flowing-temperature between both ends of the wall member, heat transmission (heat flow) is carried out through the process of transmission-conduction-transmission from high temperature to low temperature, however, a heat flow ratio in a board within an opening made of a different material is different in a wall surface adjacent to the opening.

In the present invention, a surface temperature at indoor side of adjacent wall surface V that is the wall surface V of a surrounded portion consisting a room is adjusted to be same as a surface temperature of the indoor surface of board 1, whereby cold draft at window is prevented. By making a sensible temperature felt by a resident indoor same at every place comfortable space can be provided. In office building cooler air conditioning is sometimes carried out during the winter due to heat load of office apparatuses, ant at that time heating with a fan coil unit or the like is on in order to improve comfort at the window side. However, such an overall indoor air conditioning is not efficient with heat load. The present invention controls this kind of loss and efficiently reduce in air conditioning load indoor. In addition, the control portion B can be provided with a timer apparatus (not shown) and control of time such as after office hours in a commercial building or after bed time or before getting up at home can be carried out.

Since the structure of an opening in building according to the present invention is constructed as above, the following effects are mainly exhibited.

That is, since heat rays are reflected (selectively penetrate) at the time when indoor heat amount rises, such as during the summer, the penetration amount of heat rays of sun light is reduced and cooler load is lightened. At the time of lacking indoor heat amount such as during winter, electrical heating of exothermic layer prevents cold draft and dew condensation which occurs on the indoor surface of glass, as well as allows to lighten air conditioning load. In particular, measures for controlling cold draft has conventionally been taken by warm air from two heating systems including a ceiling heater and a heater mounted under window; however, since a glass surface is directly heated according to the present invention, it is highly advantageous that there is no rotary fan mechanism nor noise problem and so on. Moreover, particularly when multi-layered glass is used, it is possible to bring about excellent special effects such that the heated atmosphere within the air layer 4 is supplied into the indoor atmosphere through convection.

In addition, by relatively controlling the surface temperature to be the same as that of adjacent wall surface, consumption of electricity which is a problem of this kind of exothermic board can be efficiently held down and comfortable indoor space can be provided. Conventionally it was required to mount a fan coil unit or the like around a perimeter as an air conditioner; however, the present invention enables to improve conform around the perimeter without mounting such an apparatus.

Therefore, according to the present invention, the above-mentioned functional surface not only makes indoor space comfortable, but also efficiently utilizes a functional surface and provides indoor space with comfort ensuring illuminance since a loss due to mingling is smaller compared to a fan coil even if the opening is large.

## Claims

1. A transparent board having exothermic function characterized in that an exothermic layer is formed on a side of at least one sheet of the transparent board, and in the transparent board in which the exothermic function is given by providing with a electrode layer at a suitable position on a periphery edge of said exothermic layer, said exothermic layer is selective penetrating (reflecting) film for specific wave length.

2. The transparent board having exothermic function according to Claim 1 characterized in that said exothermic layer is a film structure.

3. A transparent board having exothermic function characterized in that an exothermic layer is formed on a side of at least one sheet of the transparent board, and in the transparent board in which the exothermic function is given by providing an electrode layer at a suitable position on a
periphery edge of said exothermic layer, an upper layer or a lower layer is formed on the surface of said exothermic layer.

4. A transparent board having exothermic function characterized in that an exothermic layer is formed on a side of at least one sheet of the
transparent board, and in the transparent board in which the exothermic function is given by providing an electrode layer at a suitable position on a
periphery edge of said exothermic layer, a layered portion of said respective layers is formed on a recess being provided on the board.

5. A transparent board having exothermic function characterized in that an exothermic layer is formed on a side of at least one sheet of the
transparent board, and in the transparent board in which the exothermic function is given by providing an electrode layer at a suitable position on a
periphery edge of said exothermic layer, said electrode layer is partially formed on the end of the exothermic layer.

6. A transparent board having exothermic function characterized in that an exothermic layer is formed on a side of at least one sheet of the
transparent board, and in the transparent board in which the exothermic function is given by providing an electrode layer at a suitable position on a
periphery edge of said exothermic layer, power is supplied from a power source to said electrode layer at partial pressure so that voltage drop will
not occur due to electrical resistance of said exothermic layer.

7. A transparent board having exothermic function characterized in that in a multi-layered member comprising at least two sheets of
transparent boards through an air layer by a spacer, an exothermic layer is formed on the air layer side surface of said space.

8. A transparent board having exothermic function characterized in that in a multi-layered member comprising at least two sheets of transparent boards through an air layer by a spacer, an exothermic layer is formed on the air layer side surface of the board at the indoor side.

9. The transparent board having exothermic function according to Claim 8 characterized in that said exothermic layer and an electrode layer
are formed on the adjoining surface of the spacer and the board in electrically insulating manner.

10. The transparent board having exothermic function according to Claim 9 characterized in that said electrical insulating manner is a seal member mixed with insulating layer or insulator.

11. The transparent board having exothermic function according to Claim 9 characterized in that said electrical insulating manner is a substantially L-shaped insulating layer covering small portion of the air layer side surface of the spacer.

12. The transparent board having exothermic function according to Claim 8 characterized in that a secondary seal material in which an insulator is not mixed is formed in the outer periphery of said spacer.

13. The transparent board according to Claim 12 characterized in that an electrode connecting said exothermic layer and the power source is formed in said secondary seal material and a chamfering surface is formed at end of the board.

14. The transparent board having exothermic function according to Claim 9 characterized in that said electrode layer is formed within a air layer surrounded by the spacer.

15. The transparent board having exothermic function according to Claim 9 characterized in that said electrode layer is formed outside of the spacer.

16. The transparent board having exothermic function according to Claim 8 characterized in that a release portion communicating an intermediate layer and indoor is provided at a portion of the board
arranged on the indoor side among said boards.

17. The transparent board having exothermic function according to Claim 8 characterized in that among the said boards, the board having the exothermic layer arranged in the indoor side is capable of being mounted afterwards.

18. The transparent board having exothermic function according to Claim 8 characterized in that the outer periphery of said board is fitted in a frame and the electrode layer of said board is arranged extending to the adjacent to the frame.

19. The transparent board having exothermic function according to Claim 8 characterized in that a wiring electrically connecting an electrode layer provided in the periphery edge of said exothermic layer and an outer power is allowed to pass through a space within said frame and guided out.

20. The transparent board having exothermic function according to Claim 8 characterized in that a hollow member is attached in the outer periphery of a frame, the wiring being guided from the space within said frame is allowed to pass through the space within the hollow member, and the guiding portion of the wiring from each portion is insulated.

21. The transparent board having exothermic function according to Claim 8 characterized in that a window portion is provided in a frame or a portion of various hollow members attached to the frame, and a terminal for the wiring accommodates within the hollow member of each portion from the window portion.

22. The transparent board having exothermic function according to Claim 21 characterized in that said window portion is provided with a lid portion being detachable or capable of opening and closing.

23. A system utilizing a transparent board having exothermic function characterized in that an exothermic layer is formed on a side of at least one
sheet of a transparent board, in the transparentboard in which the exothermic function is given by providing an electrode layer at a suitable position on a periphery edge of said exothermic layer, the electrode layer of said exothermic layer is connected with a main power and a control portion provided with a driving portion and an on-off switch for driving and controlling said main power, and a sensor to sense a surface temperature of the board is formed at said control portion.

24. The system utilizing a transparent board having exothermic function according to Claim 23 characterized in that said sensor is noncontact or
contact temperature sensor.

25. The system utilizing a transparent board having exothermic function according to Claim 23 characterized in that said control portion is provided with a sensor to sense a temperature of indoor wall surface.

26. The system utilizing a transparent board according to Claim 23 characterized in that said control portion is provided with a timer apparatus.

27. The system utilizing a transparent board according to Claim 23 characterized in that a plurality of the exothermic boards are mounted,
said plurality of the exothermic boards are controlled by said control portion.

28. The system utilizing a transparent board according to Claim 23 characterized in that said sensor is provided at any one of a plurality of
exothermic boards and the plurality of exothermic boards are simultaneously controlled at the level of said sensor.

29. The system utilizing a transparent board and exothermic function according to Claim 23 characterized in that temperature of said exothermic
board is controlled to be same or substantially same as that of the adjacent indoor wall surface.

30. The system utilizing a transparent board according to Claim 23 characterized in that temperature of said exothermic boards is controlled to an arbitrary temperature within the range of performance.
